# EUROPEAN PATENT APPLICATION

(11) **EP 1 272 013 A2**
(43) Date of publication of application: **02.01.2003**
(21) Application number: 02252891.3
(22) Date of filing: 24.04.2002
(51) Int. Cl.: H05H 1/34

(54) **Process of forming an electrode**

(30) Priority: 31.05.2001 US 870896
(71) Applicant: THE ESAB GROUP, INC., Florence, South Carolina 29501-0545 (US)
(72) Inventor: Nemchinsky, Valerian, Florence, South Carolina 29501 (US)
(74) Representative: MacDougall, Donald Carmichael

(57) **Abstract**

A method of forming an electrode for a plasma arc torch is disclosed, and wherein the electrode comprises a copper holder defining an opening therein. An emissive element is secured to a cavity formed in a relatively non-emissive separator having a solid rear wall at one end thereof. The emissive element and separator are positioned within the opening defined by the copper holder such that the emissive element is surrounded by the separator and the copper holder. In this regard, the emissive element is prevented from movement along the longitudinal axis of the torch relative to the separator during a post-assembly heating step. In addition, the emissive element is not exposed to the atmosphere during the heating step, which allows a greater bond between the emissive element and the separator.

## Description

### FIELD OF THE INVENTION

The present invention relates to plasma arc torches, and more particularly to a method of forming an electrode for supporting an electric arc in a plasma arc torch.

### BACKGROUND OF THE INVENTION

Plasma arc torches are commonly used for the working of metal, including cutting, welding, surface treatment, melting, and annealing. Such torches include an electrode which supports an arc which extends from the electrode to a work piece in the transferred arc mode of operation. It is also conventional to surround the arc with a swirling vortex flow of gas, and in some torch designs it is conventional to also envelop the gas and arc in a swirling jet of water.

The electrode used in conventional torches of the described type typically comprises an elongate tubular member composed of a material of high thermal conductivity, such as copper or a copper alloy. The forward or discharge end of the tubular electrode includes a bottom end wall having an emissive element imbedded therein, which supports the arc. The emissive element is composed of a material which has a relatively low work function, which is defined in the art as the potential step, measured in electron volts (ev), which permits thermionic emission from the surface of a metal at a given temperature. In view of this low work function, the element is thus capable of readily emitting electrons when an electrical potential is applied thereto. Commonly used materials include hafnium, zirconium, tungsten, and alloys thereof. The emissive element is typically surrounded by a relatively non-emissive separator, which acts to prevent the arc from migrating from the emissive element to the copper holder. A nozzle surrounds the discharge end of the electrode and provides a pathway for directing the arc towards the work piece.

More specifically, the emissive insert erodes during operation of the torch, such that a cavity or hole is defined between the emissive insert and the metallic holder. When the cavity becomes large enough, the arc "jumps" or transfers from the emissive insert to the holder, which typically destroys the electrode. To prevent or at least impede the arc from the emissive insert to the holder, which typically destroys the electrode. To prevent or at least impede the arc from jumping to the metallic holder, some electrodes includes a relatively non-emissive separator that is disposed between the emissive insert and the metallic holder. Separator are disclosed in U.S. Patent No. 5,023,425, which is assigned to the assignee of the present invention and incorporated herein by reference.

The assignee of the present invention has previously developed a method for making an electrode which significantly improved service life, as described in U.S. Patent No. 5,097,111, the entire disclosure of which is incorporated herein by reference. In particular, the '111 patent discloses a method for making an electrode which includes the step of forming an opening in the front face of a cylindrical holder or blank of copper or copper alloy and inserting a relatively non-emissive separator, which is preferably formed of silver and sized to fit substantially with the opening. Next, the non-emissive separator is axially drilled to form a cavity having a solid rear wall in one embodiment at the back of the cavity, and a cylindrical emissive element is pressed into the cavity. To complete fabrication of the electrode, the front face of the assembly is machined to provide a smooth outer surface, which includes a circular outer end face of the emissive element, a surrounding annular ring of the non-emissive separator, and an outer ring of the copper holder.

While the method of forming an electrode described by the '111 patent provides substantial advances in the art, further improvements are desired. In particular, it has been shown that heating the electrode after the emissive element has been pressed into the separator improves the life of the electrode by forming a diffusion bond between the emissive element and the separator. However, the post-assembly heating step described above oftentimes causes the emissive element to "pop" or migrate out of the cavity during the heating step. This is particularly true for emissive elements that are formed out of a combination of metal powders, which typically have a density of 90-95% of theoretical. In this regard, around 5-10% of the emissive element is composed of air voids between the powdered materials. These voids expand during the heating step, which causes the emissive element to move relative to the separator.

In addition, air can be trapped between the emissive element and the separator as the emissive element is inserted in the separator, which can also expand to move the emissive element relative to the separator during the heating step. This creates a gap between the emissive element and the solid rear wall of the cavity in the separator, which decreases the heat transfer capability of the electrode. Disadvantageously, a larger percentage of the emissive element is subsequently removed during the machining step, which wastes material.

It is also desirable to limit the exposure of the emissive element to the atmosphere during the assembly of the electrode. In particular, gases from the atmosphere, such as nitrogen, can pass between the emissive element and separator during the post-assembly heating step if the emissive element is exposed to the atmosphere, which can weaken the bond or interface therebetween. Accordingly, it is desirable to form an electrode for a plasma arc torch that restricts movement of the emissive element during assembly of the electrode. It is also desirable to form an electrode for a plasma arc torch wherein the emissive element is not exposed to the atmosphere during the post-assembly heating step so that an improved bond can be formed therebetween.

### SUMMARY OF THE INVENTION

The present invention was developed to improve upon conventional methods of making electrodes and those methods disclosed in the '111 patent. It has been discovered that the difficulties of the methods described above, namely movement of the emissive element in the separator during the post-assembly heating step as well as exposing the emissive element to the atmosphere during the heating step, can be overcome by positioning the emissive element in a cavity having a solid rear wall defined by the separator, inverting the assembly, and inserting the assembly into an opening or bore defined by the metallic holder such that the emissive element is fully surrounded by the separator and the metallic holder. Thus, during the post-assembly heating step the emissive element is prevented from moving relative to the separator. In addition, the emissive element is sealed from the atmosphere after the assembly is inserted in the opening of the holder, such that gases from the atmosphere cannot enter between the emissive element and the separator during the post-assembly heating step.

More particularly, in accordance with one preferred embodiment of the present invention, a method of forming an electrode for use in a plasma arc torch comprises at least partially inserting an emissive element into a separator having an open end and a closed end. The separator and emissive element are then at least partially inserted into an opening or bore having an open end and a closed end defined by a metallic blank such that the emissive element is positioned between the closed end of the metallic blank bore and the closed end of the separator cavity. To finish the electrode, at least part of the closed end of the separator is removed so as to expose the emissive element adjacent the open end of the metallic blank.

In one embodiment, the method further comprises heating the metallic blank, separator, and emissive element to a specific temperature for a predetermined period of time. The heating step acts to cause diffusion bonding between the metallic blank, separator, and emissive element. For example, heating the electrode to a temperature in the range of around 720-800°C, and more particularly around 750°C, can increase the life span of the electrode by a factor of two or three. In one embodiment, the heating step includes forming thermal conducting paths, preferably formed of silver, between the emissive element and the separator. Advantageously, the emissive element is sealed and surrounded by the separator and holder during the formation of the electrode. As such, the emissive element is prevented from moving during the post-assembly heating step, and a strong bond is formed between the emissive element and the separator.

The emissive element comprises a metallic material having a relatively low work function, such as hafnium, zirconium, or tungsten. The metallic material may also include powdered mixtures and alloys thereof, which may include elements such as silver, gold, copper, and aluminum. The relatively non-emissive separator is positioned about the emissive element such that the separator is interposed between and separates the metallic holder from the emissive element at the front end of the holder, whereby the separator acts to resist detachment of the electric arc from the emissive element and attachment of the arc to the metallic holder. The separator which surrounds the emissive element is preferably formed of a metallic material, such as silver, which is described in the '425 patent mentioned above. This serves to increase the service life of the electrode, since the silver and any oxide which does form are very poor emitters. As a result, the arc will continue to emit from the emissive element, rather than from the metallic holder or the separator, which increases the service life of the electrode. In a preferred embodiment, the separator has a tubular shape defining a cavity or opening at one end thereof and a solid wall at the other end such that the separator and the emissive element have a close-fitting relationship. In addition, the emissive element and separator can be brazed together using a brazing material, such as silver or silver alloy.

Accordingly, the present invention provides a method of forming an electrode having improved thermal conductivity by preventing movement of the emissive element relative to the separator during the heating step of forming the electrode. In addition, the present invention provides a method of forming an electrode wherein the emissive element is sealed from the atmosphere during the heating step of forming the electrode, such that gases or other materials from the atmosphere are prevented from migrating between the emissive element and the separator, which results in a stronger bond therebetween.

### BRIEF DESCRIPTION OF THE DRAWINGS

Having thus described the invention in general terms, reference will now be made to the accompanying drawings, which are not necessarily drawn to scale, and wherein:
Figure 1 is a sectioned side elevational view of a plasma arc torch which embodies the features of the present invention;
Figure 2 is an enlarged perspective view of an electrode in accordance with the present invention;
Figure 3 is an enlarged sectional side elevational view of an electrode in accordance with the present invention;
Figures 4-7 are schematic views illustrating the steps of a preferred method of fabricating the electrode in accordance with the present invention; and
Figure 8 is an end elevational view of the finished electrode.

### DETAILED DESCRIPTION OF THE INVENTION

The present invention now will be described more fully hereinafter with reference to the accompanying drawings, in which preferred embodiments of the invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. Like numbers refer to like elements throughout.

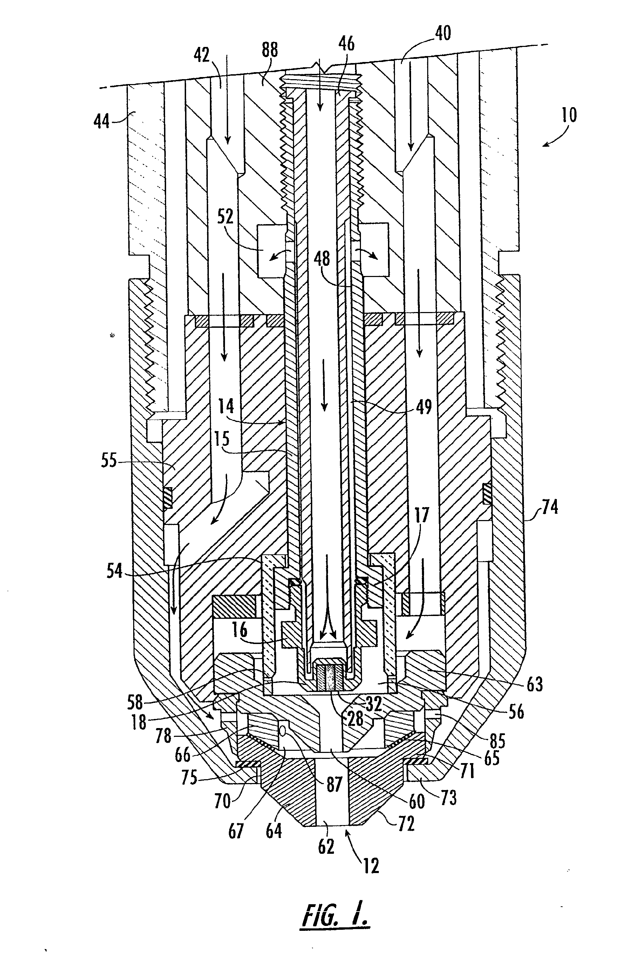

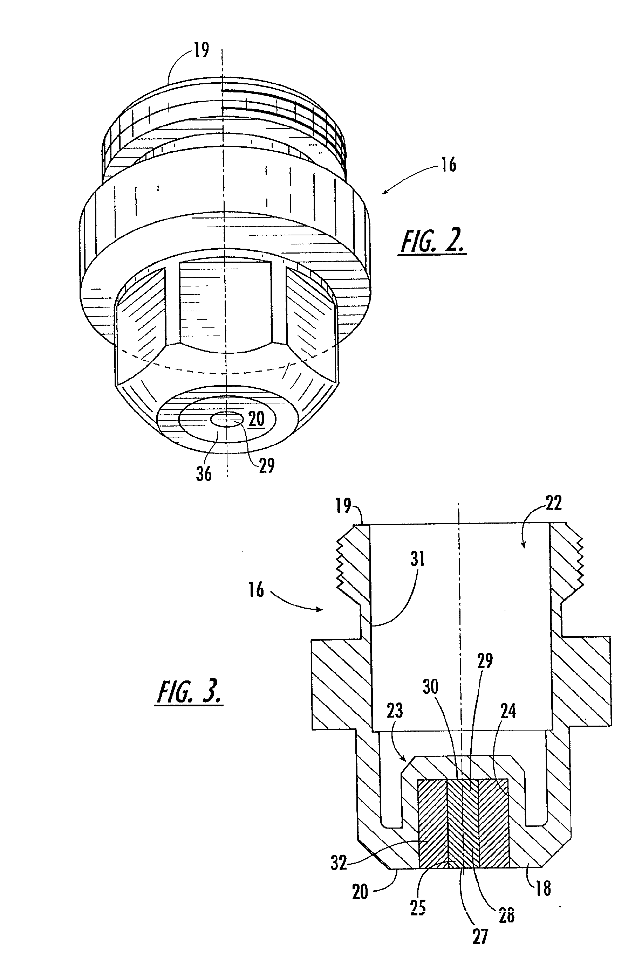

With reference to Figure 1, a plasma arc torch **10** embodying the features of the present invention is depicted. The torch **10** includes a nozzle assembly **12** and a tubular electrode **14.** The electrode **14** preferably is made of copper or a copper alloy, and is composed of an upper tubular member **15** and a lower cup-shaped member or holder **16.** The upper tubular member **15** is of elongate open tubular construction and defines the longitudinal axis of the torch **10.** The upper tubular member **15** includes an internally threaded lower end portion **17.** The holder **16** is also of tubular construction, and includes a lower front end and an upper rear end. A transverse end wall **18** closes the front end of the holder **16,** and the transverse end wall **18** defines an outer front face **20** (Figure 2). The rear end of the holder **16** is externally threaded and is threadably joined to the lower end portion **17** of the upper tubular member **15.**

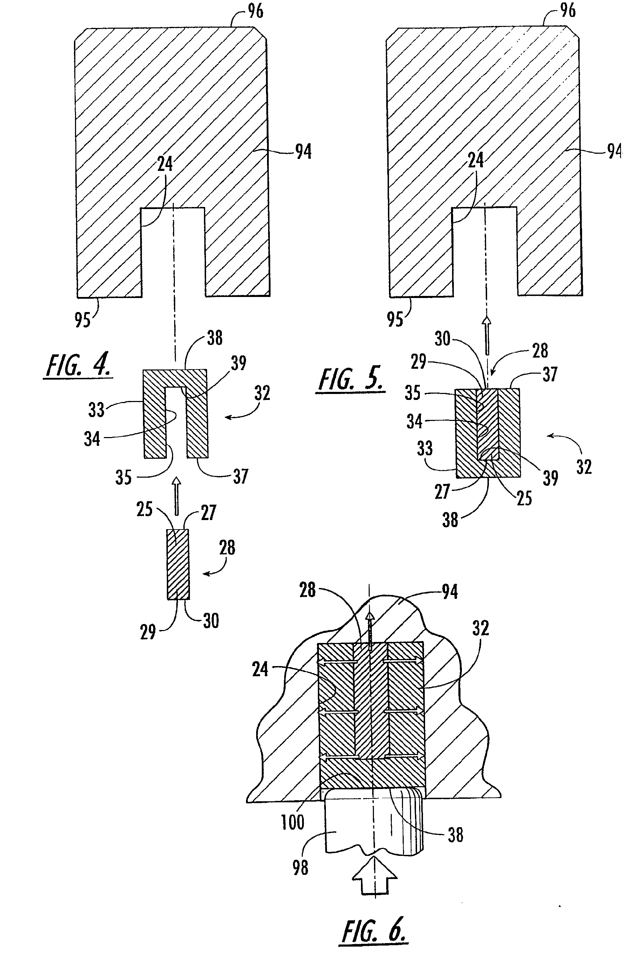

With primary reference to Figures 2-5, the holder **16** is open at the rear end **19** thereof such that the holder is of cup-shaped configuration and defines an internal cavity **22.** The internal cavity **22** has a surface **31** that includes a cylindrical post **23** extending into the internal cavity along the longitudinal axis. A generally cylindrical opening or bore **24** is formed in the front face **20** of the end wall **18** and extend rearwardly along the longitudinal axis and into a portion of the holder **16.**

An assembly comprising an emissive element or insert **28** and a relatively non-emissive separator **32** is mounted in the bore **24** and is disposed coaxially along the longitudinal axis. The emissive element **28** has a first end **29** and a first end face **30,** which is preferably circular. The emissive element **28** also includes a generally circular second end **25** and a second end face **27** lying in the plane of the front face **20** of the holder **16** and opposite the first end face **30.** The emissive element **28** is composed of a metallic material which has a relatively low work function, in a range of about 2.7 to 4.2 ev, so that it is adapted to readily emit electrons upon an electrical potential being applied thereto. Suitable examples of such materials are hafnium, zirconium, tungsten, and alloys thereof. To help form a bond between the emissive element **28** and the separator **32,** a preferred embodiment of the emissive element comprises a powdered combination of materials, such as hafnium and silver. Other powders may also be used, such as powders of the materials described above. The powders are mixed in a predetermined ratio, such as 2:1 hafnium/silver or 1:1 hafnium/silver. Due to the physical nature of the powdered mixture, the emissive element **28** has a density less than that of a pure or "theoretical" material. For example, the density of the emissive element **28** according to a preferred embodiment is around 95% of theoretical. Thus, voids, such as air pockets, determine about 5% of the density, as discussed more fully below. According to one embodiment, the emissive element **28,** which is pre-manufactured from powders in the form of a pellet, is secured to the separator **32** by a slight interference or press fit, although other securing methods can also be used.

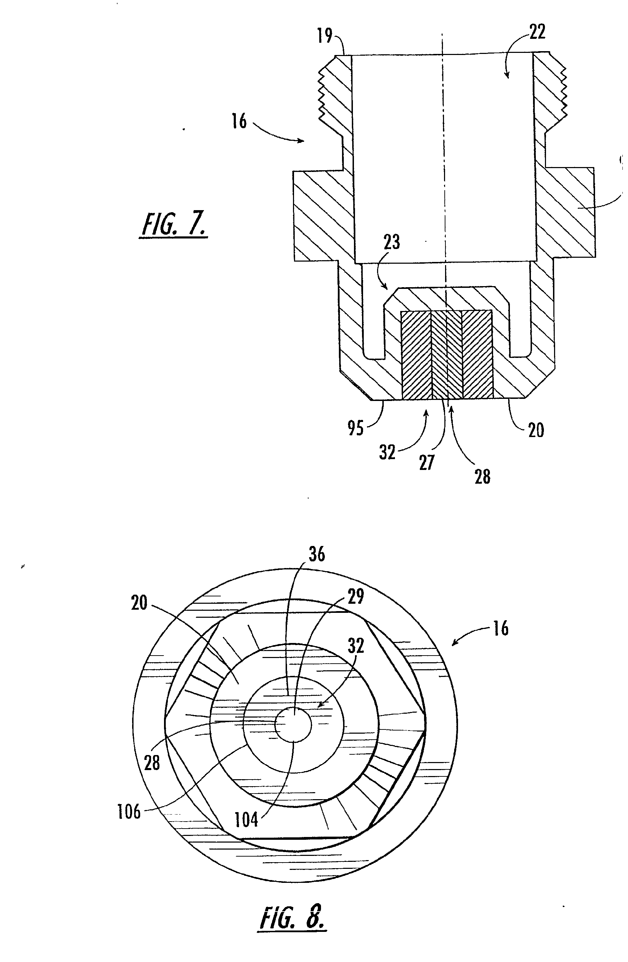

The separator **32** is positioned in the bore **24** coaxially about the emissive element **28.** The separator **32** has an outer peripheral wall **33** (Figures 4-5) extending the length of the bore **24,** and an inner peripheral wall **34** extending substantially the length of the emissive element **28.** In this regard, the separator **32** defines a cavity **35** having an open end and a closed end. More specifically, the cavity **35** is defined by an end face **37** lying in the plane of the first end face **30** of the emissive element **28,** the inner peripheral wall **34,** and a solid rear end wall **38** having an inner surface **39.** In one embodiment, the inner surface **39** is in contact with the second end face **27** of the emissive element **28.** The outer peripheral wall **33** is illustrated as having a substantially constant outer diameter over the length of the separator, although it will be appreciated that other geometric configurations would be consistent with the scope of the invention, such as frustoconical. At the second end face **27** of the emissive element **28,** the separator **32** preferably has a radial thickness of at least about 0.01 inch between the inner peripheral wall **34** and the outer peripheral wall **33,** and preferably the diameter of the emissive element **28** is about 30-80% of the diameter of the separator **32.** As a specific example, the emissive element **28** typically has a diameter of about 0.08 inch and a length of about 0.25 inch, and the outer diameter of the separator **32** is about 0.25 inch.

The separator **32** is composed of a metallic material having a work function that is greater than that of the material of the holder **16,** and also greater than that of the material of the emissive element **28.** More specifically, it is preferred that the separator **32** be composed of a metallic material having a work function of at least about 4.3 ev. In a preferred embodiment, the separator **32** comprises silver as the primary material, although other metallic materials, such as gold, platinum, rhodium, iridium, palladium, nickel, and alloys thereof, may also be used.

For example, in one particular embodiment of the present invention, the separator **32** is composed of a silver alloy material comprising silver alloyed with about 0.25 to 10 percent of an additional material selected from the group consisting of copper, aluminum, iron, lead, zinc, and alloys thereof. The additional material may be in elemental or oxide form, and thus the term "copper" as used herein is intended to refer to both the elemental form as well as the oxide form, and similarly for the terms "aluminum" and the like.

With reference again to Figure 1, the electrode **14** is mounted in a plasma torch body **88,** which includes gas and liquid passageways **40** and **42,** respectively. The torch body **88** is surrounded by an outer insulated housing member **44.** A tube **46** is suspended within the central bore **48** of the electrode **14** for circulating a liquid cooling medium, such as water, through the electrode **14.** The tube **46** has an outer diameter smaller than the diameter of the bore **48** such that a space **49** exists between the tube **46** and the bore **48** to allow water to flow therein upon being discharged from the open lower end of the tube **46.** The water flows from a source (not shown) through the tube **46,** inside the internal cavity **22** and the holder **16,** and back through the space **49** to an opening **52** in the torch body **88** and to a drain hose (not shown). The passageway **42** directs injection water into the nozzle assembly **12** where it is converted into a swirling vortex for surrounding the plasma arc. The gas passageway **40** directs gas from a suitable source (not shown), through a gas baffle **54** of suitable high temperature material into a gas plenum chamber **56** via inlet holes **58.** The inlet holes **58** are arranged so as to cause the gas to enter in the plenum chamber **56** in a swirling fashion. The gas flows out of the plenum chamber **56** through coaxial bores **60** and **62** of the nozzle assembly **12.** The electrode **14** retains the gas baffle **54.** A high-temperature plastic insulator body **55** electrically insulates the nozzle assembly **12** from the electrode **14.**

The nozzle assembly **12** comprises an upper nozzle member **63** which defines the first bore **60,** and a lower nozzle member **64** which defines the second bore **62.** The upper nozzle member **63** is preferably a metallic material, and the lower nozzle member **64** is preferably a metallic or ceramic material. The bore **60** of the upper nozzle member **63** is in axial alignment with the longitudinal axis of the torch electrode **14.**

The lower nozzle member **64** is separated from the upper nozzle member **63** by a plastic spacer element **65** and a water swirl ring **66.** The space provided between the upper nozzle member **63** and the lower nozzle member **64** forms a water chamber **67.**

The lower nozzle member **64** comprises a cylindrical body portion **70** which defines a forward or lower end portion and a rearward or upper end portion, with the bore **62** extending coaxially through the body portion **70.** An annular mounting flange **71** is positioned on the rearward end portion, and a frustoconical surface **72** is formed on the exterior of the forward end portion coaxial with the second bore **62.** The annular flange **71** is supported from below by an inwardly directed flange **73** at the lower end of the cup **74,** with the cup **74** being detachably mounted by interconnecting threads to the outer housing member **44.** A gasket **75** is disposed between the two flanges **71** and **73.**

The bore **62** in the lower nozzle member **64** is cylindrical, and is maintained in axial alignment with the bore **60** in the upper nozzle member **63** by a centering sleeve **78** of any suitable plastic material. Water flows from the passageway **42** through openings **85** in the sleeve **78** to the injection ports **87** of the swirl ring **66,** which injects the water into the water chamber **67.** The injection ports **87** are tangentially disposed around the swirl ring **66,** to impart a swirl component of velocity to the water flow in the water chamber **67.** The water exits the water chamber **67** through the bore **62.**

A power supply (not shown) is connected to the torch electrode **14** in a series circuit relationship with a metal workpiece, which is usually grounded. In operation, a plasma arc is established between the emissive element **28** of the electrode, which acts as the cathode terminal for the arc, and the workpiece, which is connected to the anode of the power supply and is positioned below the lower nozzle member **64.** The plasma arc is started in a conventional manner by momentarily establishing a pilot arc between the electrode **14** and the nozzle assembly **12,** and the arc is then transferred to the workpiece through the bores **60** and **62.**

### METHOD OF FABRICATION

The invention also provides a simplified method for fabricating an electrode of the type described above. Figures 4-7 illustrate a preferred method of fabricating the electrode in accordance with the present invention. As shown in Figure 4, a cylindrical blank **94** of copper or copper alloy is provided having a front face **95** and an opposite rear face **96.** A generally cylindrical opening is then formed, such as by drilling, in the front face **95** so as to form a bore **24** having an open end and a closed end.

As previously described, a separator **32** is formed of a silver alloy material. In one embodiment, for example, the silver alloy material comprises silver alloy with about 0.25 to 10% of copper, although pure silver can also be used. The separator **32** is configured and sized to substantially occupy the bore **24** and for receiving the emissive element **28.** More specifically, the outer peripheral wall **33** and rear wall **38** of the separator **32** are sized to have a close-fitting relationship with the bore **24,** and the inner peripheral wall **34** and inner surface **39** are sized to have a close-fitting relationship with the emissive element **28.** In this regard, the separator **32** may be formed by first forming a generally cylindrical solid blank and then forming a cylindrical cavity **35** coaxially therein, such as by drilling. Other methods of fabrication can also be used, such as extrusion.

As shown in Figure 4, the emissive element **28** is positioned within the cylindrical cavity **35** of the separator **32** such that the emissive element is in contact with the solid end wall **39.** In a preferred embodiment, the emissive element **28** comprises a combination of hafnium and silver powders that are pressed or compacted into the cavity **35** of the separator such that first end face **30** of the emissive element is lying in the plane of the end face **37** of the separator **32.**

Next, as shown in Figure 5, the emissive element **28** and separator **32** are positioned, such as by inverting or rotating the assembly, such that the open end face **37** of the separator **32** is facing the front face **95** and bore **24** of the cylindrical blank **94.** The separator **32** and the emissive element **28** are then at least partially inserted in the bore **24** such that the outer peripheral wall **33** of the separator slidably engages the inner wall of the cavity. Preferably, the separator **32** and emissive element **28** are inserted into the bore **24** until the first end face **30** of the emissive element and the end face **37** of the separator are in contact with the surface of the cavity. As a result of the inserting step, the emissive element **28** is positioned between the closed end of the metallic blank bore **24** and the closed end of the separator cavity **35.**

According to one embodiment shown in Figure 6, a tool **98** having a generally planar circular working surface **100** is placed with the working surface in contact with the end wall **38** of the separator **32.** The outer diameter of the working surface **100** is slightly smaller than the diameter of the bore **24** and the cylindrical blank **94.** The tool **98** is held with the working surface **100** generally coaxial with the longitudinal axis of the torch **10,** and force is applied to the tool so as to impart axial compressive forces to the emissive element **28** and the separator **32** along the longitudinal axis. For example, the tool **98** may be positioned in contact with the separator **32** and then struck by a suitable device, such as the ram of a machine. Regardless of the specific technique used, sufficient force is imparted so as to cause the emissive element **28** and the separator **32** to be deformed radially outwardly such that the emissive element is tightly gripped and retained by the separator, and the separator is tightly gripped and retained by the bore **24.**

A further process in the formation of the electrode is heating the electrode in order to improve the bond between the emissive element **28** and the separator **32.** Although Figure 6 shows the heating step during the pressing step, the heating step preferably occurs after the pressing step. It has been determined that heating the electrode **14** to a high temperature, such as between 720°-800°C, allows the emissive element **28** and separator **32** to form a strong diffusion bond, which can increase the life span of the electrode by a factor of two or three. This is especially true when the emissive element comprises powders of an emissive material and silver and the separator comprises silver, wherein the heating step allows the formation of thermal conducting paths extending between the emissive element **28** and the separator **32.** In this example, the thermal conducting paths are formed of silver extending from the emissive element **28** to the separator **32.**

One problem that may arise when using an emissive element comprising powdered materials, however, is the expansion of the voids or air pocket present in the emissive element during the heating step. The expansion of the voids can cause the emissive element to "pop" out of the separator in conventional electrodes, which leaves a gap between the emissive element and separator and decreases the thermal conductivity of the electrode. According to the present invention, however, the arrangement of the emissive element **28** and the separator **32** discussed above prevents the harmful movement of the emissive element relative to the separator. Moreover, the arrangement of the emissive element **28** and separator **32** according to the present invention solves another problem discussed above, namely exposing the separator to the atmosphere during the post-assembly heating step. Accordingly, the method of the present invention prevents gases, such as nitrogen, from entering between the emissive element **28** and the separator **32.** As such, the bond formed between the emissive element **28** and the separator **32** is strong and not contaminated with extra gases from the atmosphere during the heating step.

Figure 7 shows further steps in completing the fabrication of the holder **16,** wherein the external periphery of the cylindrical blank **94** is shaped as desired, including formation of external threads at the rear end **19** of the holder **16.** The front face **95** of the blank **94,** the separator **32,** and the emissive element **28** are machined so that they are substantially flat and flush with one another. More specifically, the front face **95** of the blank **94** and end wall **38** of the separator **32** are machined such that the end face **27** of the emissive element **28** is exposed and lying in the plane of the front face **20** of the holder **16.**

Figure 8 depicts an end elevational view of the holder **16.** It can be seen that the separator **32** separates the end face **27** of the emissive element **28** from the front face **20** of the holder **16.** The separator **32** has an annular shape including an inner perimeter **104** and an outer perimeter **106.** Because the separator **32** is formed of the silver alloy material having a higher work function than that of the emissive element **28,** the separator serves to discourage the arc from detaching from the emissive element and becoming attached to the holder **16.** Thus, the present invention provides a method of making an electrode **14** for use in a plasma arc torch **10** wherein the emissive element **28** is secured to the separator **32** such that the emissive element is prevented from popping out of or migrating from the cavity **35** of the separator during the post-assembly heating step. In addition, the emissive element **28** is not exposed to the atmosphere during the heating step, which allows a stronger bond to develop between the emissive element and the separator **32** during the heating process.

Many modifications and other embodiments of the invention will come to mind to one skilled in the art to which this invention pertains having the benefit of the teachings presented in the foregoing descriptions and the associated drawings. For example, the separator and/or emissive element can have other shapes and configurations, such as conical or rivet-shaped, without departing from the spirit and scope of the invention. Therefore, it is to be understood that the invention is not to be limited to the specific embodiments disclosed and that modifications and other embodiments are intended to be included within the scope of the appended claims. Although specific terms are employed herein, they are used in a generic and descriptive sense only and not for purposes of limitation.

## Claims

1. An intermediate product for forming an electrode for a plasma arc torch, comprising:
a metallic blank having a front and rear end, the front end defining an opening having an inner surface;
a separator positioned at least partially within the opening of the metallic blank, the separator defining a cavity at one end and having a solid rear wall at the other end; and
an emissive element positioned within the cavity of the separator, wherein the emissive element is completely encapsulated by the separator and the metallic blank.

2. An electrode according to Claim 1, wherein the metallic blank is formed of at least one from the group consisting of copper, silver, aluminum, and alloys thereof.

3. An electrode according to Claim 1, wherein the separator is formed of at least one from the group consisting of silver, gold, copper, aluminum, and alloys thereof.

4. An electrode according to Claim 1, wherein the emissive element is formed of at least one from the group consisting of hafnium, tungsten, zirconium, silver, gold, copper, aluminum, and powdered mixtures thereof.

5. An intermediate product for forming an electrode for a plasma arc torch, comprising:
a metallic blank having a front and rear end, the front end defining an opening having an inner surface;
a separator positioned at least partially within the opening of the metallic blank, the separator defining a cavity at one end and having a solid rear wall at the other end; and
an emissive element positioned within the cavity of the separator, wherein the emissive element is restrained from axial movement by the inner surface of the opening and the solid rear wall of the separator.

6. An electrode according to Claim 1, wherein the metallic blank is formed of at least one from the group consisting of copper, silver, aluminum, and alloys thereof.

7. An electrode according to Claim 1, wherein the separator is formed of at least one from the group consisting of silver, gold, copper, aluminum, and alloys thereof.

8. An electrode according to Claim 1, wherein the emissive element is formed of at least one from the group consisting of hafnium, tungsten, zirconium, silver, gold, copper, aluminum, and powdered mixtures thereof.
